# EUROPÄISCHE PATENTSCHRIFT

(11) **EP 2 886 393 B1**
(45) Veröffentlichungstag und Bekanntmachung des Hinweises auf die Patenterteilung: **05.09.2018**
(21) Anmeldenummer: 13199460.0
(22) Anmeldetag: 23.12.2013
(51) Int. Cl.: B60P 7/15

(54) **Ladungssicherung für einen Aufbau eines Nutzfahrzeugs**
Means for securing a load for a superstructure of a commercial vehicle
Sécurisation de charge pour une structure d'un véhicule utilitaire

(43) Veröffentlichungstag der Anmeldung: 24.06.2015
(73) Patentinhaber: Schmitz Cargobull AG, 48341 Altenberge (DE)
(72) Erfinder: Beelmann, Reinhard, 45721 Haltern am See (DE)
(74) Vertreter: Cohausz & Florack

(56) Entgegenhaltungen:
- EP-A2- 1 568 541
- DE-A1- 19 751 938
- DE-A1-102013 101 363
- DE-U1-202010 000 863
- US-A- 3 964 608
- US-A- 4 052 083

## Beschreibung

Die Erfindung betrifft einen Aufbau, vorzugsweise Kofferaufbau, eines Nutzfahrzeugs, insbesondere Lastkraftwagens, Anhängers oder Sattelaufliegers, mit einem Boden, einem Dach und wenigstens einer Sperrstange zur Ladungssicherung, wobei die Sperrstange sowohl am Dach als auch am Boden arretiert ist.

Unter Nutzfahrzeugen im Sinne der Erfindung werden solche verstanden, die dem Transport von Gütern im öffentlichen Straßenverkehr dienen. Als Nutzfahrzeuge kommen daher insbesondere Lastkraftwagen, Anhänger oder Sattelauflieger in Frage. Derartige Nutzfahrzeuge können unterschiedliche Aufbauten aufweisen, die in ihrem Inneren einen Laderaum für die zu transportierenden Güter bereitstellen. Dabei werden insbesondere sogenannte Kofferaufbauten und sogenannte Planenaufbauten unterschieden.

Kofferaufbauten weisen neben einer Stirnwand und einer Rückwand zudem feste Seitenwände und ein festes Dach auf. Kofferaufbauten werden daher vorzugsweise für den Trockentransport, d. h. den Transport feuchtigkeitsempfindlicher Güter, wie beispielsweise Lebensmittel, eingesetzt. Da die Seitenwände und das Dach von Kofferaufbauten zudem in Form von Paneelen mit einer isolierenden Kernlage aufgebaut sind, die in hohem Maße thermisch isolierend wirkt, werden Kofferaufbauten zudem für sogenannte Kühltransporte verwendet, um temperaturempfindliche Güter bei geringer Temperatur zu transportieren.

Bei Planenaufbauten sind die Seitenwände und das Dach lediglich durch Planen verschlossen. Planaufbauten können daher über die Seitenwände oder das Dach beladen werden, wobei die Planen der Seitenwände bedarfsweise zur Seite geschoben werden können. Man spricht in diesem Zusammenhang von Curtainsidern. Zur Sicherung der Ladung gegen ein unerwünschtes, versehentliches Verrutschen während des Transports werden Sperrstangen in den zuvor beschriebenen Aufbauten montiert. Die Sperrstange wird dabei typischerweise an das Ende einer Ladung in Längsrichtung des Aufbaus positioniert und sowohl mit dem Boden als auch mit dem Dach verbunden. Eine verrutschende Ladung gelangt somit in Anlage an die Sperrstange, was ein weiteres Verrutschen der Ladung verhindert. Zur Arretierung der Sperrstange im Aufbau weist dieser im Boden und im Dach eine oder mehrere Schienen auf, in denen die Sperrstange festgelegt werden kann. Die Sperrstangen können somit in Längsrichtung des Aufbaus in die jeweils gewünschte Lage gebracht und dort in den Schienen arretiert werden. Auf diese Weise wird eine Ladungssicherung in Längsrichtung des Aufbaus sichergestellt.

Ein Kofferaufbau eines Nutzfahrzeugs der eingangs genannten Art ist aus der DE 4335478 A1 bekannt. Bei diesem Aufbau sind im Dach lediglich zwei Schienen zur Arretierung der Sperrstangen vorgesehen, so dass eine Ladungssicherung mit entsprechenden Sperrstangen in Querrichtung des Aufbaus nur sehr bedingt möglich ist. Ein weiterer Kofferaufbau mit an der Bordwand befestigten und in Querrichtung schwenkbaren Anschlagmitteln ist aus der US 4,052,083 bekannt. Um Ladungen unterschiedlicher Abmessungen im Aufbau in Querrichtung sichern zu können, müssen entweder viele in Längsrichtung des Aufbaus verlaufende Schienen im Boden sowie im Dach vorgesehen werden, oder es muss in Kauf genommen werden, dass die Sperrstangen teilweise nennenswert von der Ladung in Querrichtung des Aufbaus beabstandet sind.

Der vorliegenden Erfindung liegt daher die Aufgabe zugrunde, den eingangs genannten und zuvor näher beschriebenen Aufbau derart auszugestalten und weiterzubilden, dass mit einfachen Aufbauten eine befriedigerende Ladungssicherung in Querrichtung des Aufbaus erzielt werden kann.

Diese Aufgabe ist bei einem Aufbau gemäß des Oberbegriffs von Anspruch 1 dadurch gelöst, dass wenigstens ein Anschlagmittel mit einer Anschlagfläche für die Ladung derart drehbar und/oder schwenkbar an der am Dach und am Boden arretierten Sperrstange vorgesehen ist, so dass der Abstand der Anschlagfläche, insbesondere des Anschlagmittels, von der Sperrstange in Querrichtung des Aufbaus durch Drehen und/oder Schwenken des Anschlagmittels in Abhängigkeit der Ladesituation variiert werden kann.

Durch die Verwendung eines Anschlagmittels, das eine Anschlagfläche für die Ladung bereitstellt und zudem drehbar und/oder schwenkbar an der im Aufbau arretierten Sperrstange vorgesehen ist, kann der Abstand zwischen der arretierten Sperrstange und der Ladung in Querrichtung überbrückt werden. Mit anderen Worten kann das Anschlagmittel bei einer gegebenen Position der Sperrstange in Querrichtung des Aufbaus in Richtung der Ladung verstellt werden, so dass die Anschlagfläche des Anschlagmittels an oder in der Nähe der Ladung in Querrichtung des Aufbaus gesehen positioniert werden kann. Somit ist nicht erforderlich, die Sperrstange in vielen verschiedenen Positionen in Querrichtung des Aufbaus arretieren zu können, um bei variierender Ladung stets eine Position einnehmen zu können, die sich in der Nähe der Ladung befindet. Es reicht stattdessen aus, wenn die Sperrstange in Querrichtung des Aufbaus lediglich in einer oder in wenigen Positionen arretiert werden kann. Da der Abstand des Anschlagmittels von der Sperrstange variiert werden kann, ist eine Ladungssicherung in Querrichtung des Aufbaus dennoch für unterschiedliche Ladesituationen problemlos möglich.

Da Aufbauten von Nutzfahrzeugen typischerweise eine nicht unerhebliche Breite aufweisen, bietet es sich dennoch an, wenn die Sperrstange in wenigstens zwei unterschiedlichen Positionen in Querrichtung des Aufbaus arretiert werden kann. Die Sperrstange kann dabei in unterschiedlichen Schienen oder Schienenelementen, die im Boden und im Dach, vorzugsweise parallel zueinander, vorgesehen sind, arretiert werden. Die Schienenelemente verlaufen dabei insbesondere in Längsrichtung des Aufbaus. Erfindungsgemäß lässt sich deren Anzahl jedoch auf ein praktisches Minimum reduzieren.

Zudem wird der Aufwand für die Ladungssicherung in Querrichtung verringert, indem die Sperrstange zunächst im Aufbau arretiert und das Anschlagmittel anschließend auf die gewünschte Position in Querrichtung des Aufbaus verstellt wird. Die Sperrstange kann also zunächst problemlos in das in Querrichtung des Aufbaus gesehen nächste freie Schienenelement im Dach oder im Boden des Aufbaus arretiert werden. Der verbleibende Abstand von der Sperrstange zur Ladung kann dann anschließend, ohne die Sperrstange dabei weiter verstellen zu müssen, durch die Verstellung des Anschlagmittels ausgeglichen werden.

Anstelle einer Schiene oder eines Schienenelements im Boden, kann die Sperrstange alternativ oder zusätzlich auch in einer profilierten Bodenfläche als solcher arretiert werden. Es ist also nicht erforderlich, in den Boden separate Schienen einzubringen. Grundsätzlich könnte das Dach des Aufbaus gleichartig mit dem Boden des Aufbaus ausgebildet werden. Auf diese Weise ließe sich grundsätzlich erreichen, dass die Sperrstange in vielen unterschiedlichen Positionen in Querrichtung des Aufbaus arretiert werden kann. Nachteilig ist daran jedoch, dass das Dach relativ aufwendig und kostenintensiv ausgebildet werden muss. Einfacher und kostengünstiger ist es nämlich, lediglich einzelne Schienenelemente in Längsrichtung des Aufbaus vorzusehen, in denen die Sperrstange arretiert werden kann.

Bei einer ersten bevorzugten Ausgestaltung des Aufbaus ist die wenigstens eine Sperrstange sowohl am Dach als auch am Boden kraftschlüssig und/oder formschlüssig arretierbar vorgesehen. Auf diese Weise können hinreichende Kräfte zur Ladungssicherung in Querrichtung des Aufbaus von der Sperrstange aufgenommen und an den Aufbau abgegeben werden. Weiter bevorzugt ist es in diesem Zusammenhang, wenn die Sperrstange verdrehsicher am Boden und/oder am Dach arretierbar ist. Die Sperrstange kann dann auch bei der Ladungssicherung übertragene Drehmomente aufnehmen und an den Aufbau ableiten. Ein Drehen der Sperrstange relativ zum Aufbau wird jedoch vermieden, da dies die weitere Ladungssicherung beeinträchtigen könnte. Zudem kann eine kraftschlüssige und/oder formschlüssige Arretierung der Sperrstange im Aufbau besonders einfach erfolgen.

Dazu muss die Sperrstange lediglich zwischen Dach und Boden verkeilt werden und/oder in entsprechende Profilierungen am Boden und am Dach eingreifen. In diesem Zusammenhang ist es besonders bevorzugt, wenn die Sperrstange formschlüssig in einem profilierten Schienenelement oder in einer Schiene im Dach und/oder im Boden arretiert ist.

Die Anzahl der Schienen bzw. Schienenelemente kann dabei aufgrund der Verwendung eines verstellbaren Anschlagmittels gering gehalten werden. Die Verwendung in sich geschlossener Schienenelemente, anstelle von ansonsten üblichen Lochschienen, ist aus hygienischen Gesichtspunkten bevorzugt, da der Aufbau in diesem Falle besser zu reinigen ist. Die formschlüssige Arretierung der Sperrstange in profilierten Schienen ist damit besonders einfach und zufriedenstellend möglich, wenn die Sperrstange zur Anbindung an das Dach und/oder den Boden einen korrespondierend zu dem wenigstens einen Schienenelement ausgebildeten Verbindungsbereich aufweist. Die Profile des Bodens und/oder des Daches einerseits sowie der Verbindungsbereich der Sperrstange andererseits können dabei vorzugsweise gleichartig jeweils in Form von positiv und negativ ausgebildet sein. Wenn die Verbindungsbereiche der Sperrstange mit dem Boden und dem Dach gleichartig ausgebildet sind, kann eine Ladungssicherung gegebenenfalls auch bei einer fehlerhaften Montage der Sperrstange durch Vertauschen des Kopf- und Fußbereichs gewährleistet werden. Die Handhabung der Sperrstange kann so vereinfacht werden.

Zudem ist der Verbindungsbereich vorzugsweise selbst profiliert und nicht etwa nur als solches in eine Öffnung in einer Lochschiene einsetzbar. Da der Boden von Nutzfahrzeugaufbauten meist ohnehin profiliert ist, kann im Bereich des Bodens bedarfsweise auf separate Schienen verzichtet werden, die bedarfsweise integrale Bestandteile des Bodens sein können. Die Schienenelemente können also in die Bodenstruktur integriert sein und müssen folglich keine separaten Bauelemente darstellen. Wenn sich die Schienen dennoch von dem angrenzenden Bereich des Bodens hinsichtlich ihrer Struktur bzw. Profilierung unterscheiden, erleichtert dies die Montage der Sperrstange in der richtigen Position bezogen auf die entsprechende Schiene zur Arretierung der Sperrstange im Dach. Eine fehlerhafte Montage der Sperrstange kann auf diese Weise vermieden werden.

Alternativ oder zusätzlich kann das Anschlagmittel stabförmig, leistenförmig oder bügelförmig ausgebildet sein. Auf diese Weise lässt sich unter Einsparung von Material eine Ladungssicherung über einen wenigstens erheblichen Teil der Höhe des Aufbaus erreichen. Um eine vergleichsweise breite Anschlagsfläche für die zu sichernde Ladung bereitzustellen, kann es sich anbieten, wenn das Anschlagmittel im Wesentlichen leistenförmig ausgebildet ist. Dies bedeutet, dass das Anschlagmittel im montierten Zustand in Längsrichtung des Aufbaus eine größere Ausdehnung aufweist als in Querrichtung des Aufbaus. Eine im Wesentlichen bügelförmige Ausbildung des Anschlagmittels macht eine nennenswerte vertikale Erstreckung des Anschlagmittels unter Bereitstellung einer Anschlagfläche über einen nennenswerten Teil der Höhe des Aufbaus möglich, wobei bedarfsweise die von der Ladung auf das Anschlagmittel ausgeübten Kräfte über wenigstens zwei Querstreben in unterschiedlichen Höhen des Aufbaus zuverlässig auf die Sperrstange übertragen werden können. Alternativ oder zusätzlich zu den zuvor beschriebenen Ausgestaltungen des Anschlagmittels bietet es sich insbesondere an, wenn das Anschlagmittel eine im Wesentlichen vertikale Anschlagfläche für die Ladung aufweist. Auf diese Weise kann sowohl hohe Ladung als auch übereinander gestapelte Ladung in Querrichtung zuverlässig gesichert werden. Darüber hinaus kann die Verwendung eines Anschlagmittels für den Doppelstockbetrieb ausreichend sein. Unter einem Doppelstockbetrieb wird dabei verstanden, dass in den Aufbau Querbalken eingezogen werden. Die Ladung kann sowohl unterhalb dieser Querbalken auf dem Boden abgesetzt als auch auf die Querbalken abgesetzt werden. Das Anschlagmittel kann in diesem Falle vorzugsweise zwischen zwei Querbalken zur Aufnahme von Ladung positioniert werden.

Wenn das Anschlagmittel drehbar an der im Aufbau arretierten Sperrstange vorgesehen und, vorzugsweise, bügelförmig ausgebildet ist, muss keine Verstellung für den Abstand des Anschlagmittels von der Sperrstange vorgesehen sein. Vielmehr kann der Abstand der Anschlagfläche für die Ladung von der Sperrstange absolut gesehen konstant bleiben. Die unterschiedliche Beabstandung der Anschlagflächen des Anschlagmittels von der Sperrstange in Querrichtung des Aufbaus kann dann durch die Drehung des Anschlagmittels um die Sperrstange bzw. deren Längsachse herbeigeführt werden. Je weiter das Anschlagmittel in eine Ebene quer zum Aufbau um die Sperrstange gedreht wird, desto weiter reicht die Anschlagfläche des Anschlagmittels zu einer der beiden Seitenwände des Aufbaus. Beim beladenen Aufbau und bei arretierter Sperrstange kann das Anschlagmittel in der Justierstellung folglich soweit um die Sperrstange herum gedreht werden, bis die Anschlagfläche des Anschlagmittels soweit in einer Querrichtung des Aufbaus von der Sperrstange weg ragt, dass die Anschlagfläche an der Ladung anliegt oder nur mehr einen geringen Abstand zur Ladung aufweist. In dieser Stellung kann das Anschlagmittel dann gegenüber der Sperrstange, insbesondere gegenüber einer weiteren Drehung gegenüber der Sperrstange, arretiert werden. In der entsprechenden Ladungssicherungsstellung ist das Anschlagmittel also vorzugsweise verdrehsicher gegenüber der Sperrstange festgelegt. Zur Arretierung, vorzugsweise zur kraftschlüssigen und/oder formschlüssigen Arretierung, des Anschlagmittels gegenüber der Sperrstange kann ein entsprechendes Befestigungsmittel vorgesehen sein.

Alternativ oder zusätzlich kann das Anschlagmittel über einen Steuerhebel mit der Sperrstange verbunden sein. Über den Steuerhebel kann dann der Abstand der Anschlagfläche von der Sperrstange verändert werden, und zwar jedenfalls dann, wenn sich der Steuerhebel in einer Justierstellung befindet. Dabei bietet es sich an, wenn der Steuerhebel in der Justierstellung gegenüber dem Anschlagmittel und/oder gegenüber der Sperrstange schwenkbar vorgesehen ist. In diesem Falle kann durch einfaches Verschwenken des Steuerhebels der Abstand der Anschlagfläche des Anschlagmittels von der Sperrstange in Querrichtung des Aufbaus eingestellt werden. Um ein versehentliches Verstellen des Anschlagmittels zu verhindern, kann der Steuerhebel in einer Ladungssicherungsstellung gegenüber der Sperrstange und/oder dem Anschlagmittel festlegbar vorgesehen sein.

In diesem Zusammenhang ist es besonders bevorzugt, wenn der Steuerhebel in der Justierstellung derart gegenüber dem Anschlagmittel und/oder gegenüber der Sperrstange schwenkbar vorgesehen ist, so dass die Anschlagfläche des Anschlagmittels für die Ladung in unterschiedlichen Ausrichtungen des Steuerhebels wenigstens im Wesentlichen vertikal ausgerichtet ist. Da meist rechteckige bzw. quaderförmige Ladungen in den vorliegend relevanten Aufbauten transportiert werden, ist eine im Wesentlichen vertikal ausgerichtete Anschlagfläche für die Ladungssicherung bevorzugt. Vor diesem Hintergrund ist es besonders zweckmäßig, wenn die Anschlagfläche in wenigstens zwei, vorzugweise mehr als zwei, Stellungen des Steuerhebels in im Wesentlichen vertikaler Richtung ausgerichtet ist. In diesem Zusammenhang ist es weiter bevorzugt, wenn die Anschlagfläche des Anschlagmittels in allen Stellungen des Steuerhebels im Wesentlichen in vertikaler Richtung ausgerichtet ist. Mit allen Stellungen des Steuerhebels sind dabei die Stellungen gemeint, die der Steuerhebel einnimmt, während das Anschlagmittel von einer minimal von der Sperrstange beabstandeten Position bis in die maximal von der Sperrstange beabstandete Position verstellt wird. Die Anschlagfläche des Anschlagmittels ist dann über den gesamten Verstellbereich des Anschlagmittels vertikal ausgerichtet.

Beispielsweise um dies zu erreichen, kann wenigstens ein Ende des Steuerhebels in der Justierstellung in vertikaler Richtung längs des Anschlagmittels und/oder der Sperrstange verschoben werden. Es kann also das Verschwenken des Steuerhebels dadurch ermöglicht werden, dass der Steuerhebel in einer vertikalen Ebene unterschiedliche Winkel zur Sperrstange und/oder dem Anschlagmittel aufweist. Dies lässt sich konstruktiv besonders einfach dadurch realisieren, dass ein Ende des Steuerhebels in vertikaler Richtung entlang der Sperrstange und/oder des Anschlagmittels verschoben wird. Der einfachen Handhabung halber bietet es sich in diesem Zusammenhang weiter an, wenn das entsprechende wenigstens eine Ende des Steuerhebels in der Justierstellung während des Verschwenkens bzw. Verschiebens längs des Anschlagmittels und/oder der Sperrstange geführt ist. In diesem Falle muss der Steuerhebel lediglich in der Justierstellung gelöst und in der Ladungssicherungstellung wieder fixiert werden. Die gewünschten Positionen des Steuerhebels finden sich dann ohne Weiteres in Folge der Zwangsführung des wenigstens einen entsprechenden Endes entlang der Sperrstange und/oder des Anschlagmittels.

Bei einer weiter bevorzugten Ausgestaltung des Aufbaus ist wenigstens einem Ende des Steuerhebels ein Befestigungsmittel derart zugeordnet, so dass das wenigstens eine Ende des Steuerhebels über das Befestigungsmittel wenigstens in vertikaler Richtung längs des Anschlagmittels und/oder der Sperrstange lösbar festgelegt werden kann. Über das Befestigungsmittel kann der Steuerhebel somit von der Justierstellung in die Ladungssicherungsstellung und zurück überführt werden. Zudem kann der Steuerhebel über das Befestigungsmittel in unterschiedlichen Positionen längs der Sperrstange und/oder des Anschlagmittels lösbar festgelegt werden. Im festgelegten Zustand, d. h. in der Ladungssicherungsstellung, können für die Ladungssicherung hinreichende Kräfte vom Befestigungsmittel aufgenommen und an die Sperrstange und/oder das Anschlagmittel abgeleitet werden. Lösbar bedeutet in diesem Zusammenhang vorzugsweise, dass das Befestigungsmittel schnell und unkompliziert von der Sperrstange und/oder dem Anschlagmittel gelöst werden kann, um den Steuerhebel in der Justierstellung längs der Sperrstange und/oder des Anschlagmittels verschieben zu können.

Vor diesem Hintergrund ist es besonders bevorzugt, wenn das wenigstens eine Ende des Steuerhebels mittels des Befestigungsmittels kraftschlüssig und/oder formschlüssig lösbar festgelegt ist. Eine kraftschlüssige Verbindung lässt sich nämlich einfach und schnell bereitstellen. Dies gilt insbesondere dann, wenn die kraftschlüssige Verbindung über eine Klemmung erfolgt. Dann muss das Befestigungsmittel beispielsweise lediglich mit einem Klemmhebel versehen werden, der in einer Stellung eine Klemmung beispielsweise mit der Sperrstange und/oder dem Anschlagmittel bewirkt, während diese Klemmung in einer anderen Stellung des Klemmhebels aufgehoben ist.

Um die Verstellung des Steuerhebels weiter zu vereinfachen, ist es zweckmäßig, wenn das wenigstens eine Befestigungsmittel an einem Schlittenelement vorgesehen ist, wobei das Schlittenelement in der Justierstellung schwenkbar mit dem Steuerhebel verbunden und verschiebbar gegenüber dem Anschlagmittel und/oder der Sperrstange gehalten ist. Über das Schlittenelement kann also eine einfache Führung entlang des Anschlagmittels und/oder der Sperrstange erfolgen, während der Steuerhebel in der Justierstellung verstellt wird. Konstruktiv besonders einfach und materialschonend ist es, wenn das Schlittenelement direkt am Anschlagmittel und/oder der Sperrstange gehalten ist.

Alternativ oder zusätzlich zu dem Steuerhebel kann das Anschlagmittel über wenigstens einen Stützhebel mit der Sperrstange verbunden sein. Das Anschlagmittel ist somit über den Stützhebel an der Sperrstange abgestützt, um die von dem Anschlagmittel bei der Ladungssicherung aufgenommenen Kräfte zuverlässig an die Sperrstange ableiten zu können. Dies ist besonders dann der Fall, wenn wenigstens zwei Stützhebel vorgesehen sind, die einerseits mit dem Anschlagmittel und andererseits mit der Sperrstange verbunden sind. Insbesondere für den Fall, dass das Anschlagmittel zur Anpassung an die Ladungssituation gegenüber der Sperrstange verschwenkt wird, kann auch der wenigstens eine Stützhebel in der Justierstellung gegenüber dem Anschlagmittel und/oder gegenüber der Sperrstange schwenkbar ausgebildet sein. Sofern das Anschlagmittel zur Anpassung der Ladungssicherung an die Ladungssituation um die Sperrstange drehbar vorgesehen ist, kann es bevorzugt sein, dass der wenigstens eine Stützhebel in der Justierstellung gegenüber dem Anschlagmittel und/oder gegenüber der Sperrstange drehbar vorgesehen ist. Der Stützhebel kann somit dem Verstellen des Anschlagmittels durch Verschwenken und/oder Drehen in die gewünschte Stellung des Anschlagmittels folgen.

Zur sicheren Ableitung höherer Kräfte, die bei der Ladungssicherung auf das Anschlagmittel wirken, kann es bevorzugt sein, wenn wenigstens ein Steuerhebel zwischen der Sperrstange und dem Anschlagmittel nach oben verläuft, während der wenigstens eine Stützhebel zwischen der Sperrstange und dem Anschlagmittel nach unten verläuft. Dies bedeutet, dass der Steuerhebel und der Stützhebel zwischen dem Anschlagmittel und der Sperrstange divergieren. Ihr Abstand in vertikaler Richtung wird also entweder in Richtung der Sperrstange oder in Richtung des Anschlagmittels größer. Der gleiche Effekt wird auch dadurch erzielt, dass wenigstens zwei Stützhebel vorgesehen sind, wobei ein Stützhebel zwischen der Sperrstange und dem Anschlagmittel nach oben verläuft, während der wenigstens eine weitere Stützhebel zwischen der Querstange und dem Anschlagmittel nach unten verläuft. Auch hier divergieren die beiden Stützhebel in einer vertikalen Ebene durch die Sperrstange derart, dass ihr Abstand hin zur Sperrstange oder hin zum Anschlagmittel größer wird. Auf die zuvor beschriebene Weise wird sichergestellt, dass in vertikaler Richtung wirkende Kraftkomponenten bei der Ladungssicherung wenigstens einen Stützhebel und/oder Steuerhebel auf Druck beanspruchen, wodurch eine höhere Kraft übertragen werden kann. Da die entsprechenden Hebel sowohl nach oben als auch nach unten verlaufen, spielt es hierbei grundsätzlich eine untergeordnete Rolle, ob die vertikalen Kraftkomponenten nach oben oder nach unten weisen.

Um die Anzahl der Ladungssicherungseinrichtungen zu verringern, die mit dem Aufbau mitgeführt werden müssen und um Material einzusparen sowie ein einfacheres und zügigeres Handling bei der Ladungssicherung zu ermöglichen, bietet es sich an, wenn an wenigstens einer Sperrstange wenigstens zwei Anschlagmittel vorgesehen sind. Diese beiden Anschlagmittel können auf entgegengesetzten Seiten der Sperrstange quer zum Aufbau vorgesehen sein, und zwar vorzugsweise in Richtung der einander gegenüberliegenden Seitenwände. Es kann folglich unter Verwendung einer einzigen Sperrstange eine Ladungssicherung sowohl zur einen als auch zur anderen Längsseite des Aufbaus quer zu diesem erfolgen.

Um die Kraftableitung an den Aufbau des Nutzfahrzeugs im Falle der Ladungssicherung zu verbessern, kann es zweckmäßig sein, wenn wenigstens zwei Sperrstangen vorgesehen sind, wobei die wenigstens zwei Sperrstangen untereinander über wenigstens ein Anschlagmittel miteinander verbunden sind. Die beiden Sperrstangen können alternativ oder zusätzlich auch direkt untereinander verbunden sein. Dies bietet sich insbesondere dann an, wenn die Gefahr besteht, dass bei der Ladungssicherung ein Drehmoment um die Vertikalachse der Sperrstange ausgeübt wird, die von der Sperrstange nicht sicher an das Dach und den Boden des Aufbaus abgeleitet werden kann. Die Sperrstange könnte sich dann nämlich im Aufbau drehen, woraufhin die Ladung des Aufbaus nicht mehr zuverlässig gesichert ist. Da das Verstellen des wenigstens einen Anschlagmittels, das mit zwei Sperrstangen verbunden ist, eine aufwendigere Konstruktion erfordert, kann es bevorzugt sein, wenn die wenigstens zwei Sperrstangen über wenigstens zwei Anschlagmittel miteinander verbunden sind. Zudem ist es der einfachen Montage und der besseren Kraftableitung halber bevorzugt, wenn die beiden Sperrstangen in Längsrichtung des Fahrzeugs hintereinander bzw. voreinander in demselben Schienenelemente jeweils im Boden und im Dach gehalten sind. Da über die Anschlagmittel der Sperrstangen ein unterschiedlicher Abstand zwischen der Ladung und den Sperrstangen überbrückt werden kann, könnten die wenigstens zwei Sperrstangen auch in unterschiedlichen Schienenelementen jeweils am Dach und am Boden arretiert sein. Hinsichtlich der Ladungssicherung ist es aber auch dann grundsätzlich bevorzugt, wenn zwischen den Sperrstangen in Längsrichtung des Aufbaus ein größerer Abstand besteht, nicht nur um auch längere Ladungen zuverlässig sichern zu können.

In diesem Zusammenhang kann eine konstruktiv einfache Ausgestaltung erreicht werden, wenn sich jeweils wenigstens ein Anschlagmittel von einer Sperrstange in Querrichtung des Aufbaus erstreckt und mit dieser Sperrstange verbunden ist, während die wenigstens zwei Anschlagmittel vorzugsweise untereinander ebenfalls verbunden sind. Die Ladungssicherungseinrichtung in Form einer Kombination aus Sperrstange und Anschlagmittel kann folglich doppelt vorgesehen sein, während die Anschlagmittel untereinander verbunden sind. Zudem oder alternativ können aber auch die Sperrstangen untereinander verbunden sein. Aus konstruktiver Sicht und zur besseren Kraftableitung ist es dabei bevorzugt, wenn die Verbindung der Anschlagmittel und/oder der Sperrstangen in Längsrichtung des Aufbaus ausgerichtet ist.

Die Erfindung wird nachfolgend anhand einer lediglich Ausführungsbeispiele darstellenden Zeichnung näher erläutert. In der Zeichnung zeigt
- Fig. 1: einen erfindungsgemäßen Aufbau eines Nutzfahrzeugs mit zwei Ladungssicherungseinrichtungen in einer schematischen Schnittansicht,
- Fig. 2A: ein Detail des Aufbaus aus Fig. 1 mit einer Ladungssicherungseinrichtung vor deren Justierung in einer Schnittansicht quer zum Aufbau,
- Fig. 2B: das Detail gemäß Fig. 2 mit der Ladungssicherungseinrichtung nach deren Justierung in einer Schnittansicht quer zum Aufbau,
- Fig. 3A: ein Detail eines Aufbaus eines Nutzfahrzeugs mit einer Ladungssicherungseinrichtung in einer Schnittansicht quer zum Aufbau,
- Fig. 3B: das Detail von Fig. 3A in einem Schnitt parallel zum Dach des Aufbaus,
- Fig. 4A: ein Schienenelement des Aufbaus und einen Fuß der Sperrstange der Ladungssicherungseinrichtung gemäß Fig. 2 in einer vertikalen Schnittansicht,
- Fig. 4B: das Schienenelement und den Fuß aus Fig. 4A in einer Draufsicht,
- Fig. 5A: ein Detail eines Aufbaus mit einer weiteren Ladungssicherungseinrichtung in einer Justierstellung in einer Schnittansicht quer zum Aufbau,
- Fig. 5B: das Detail von Fig. 5A mit der Ladungssicherungseinrichtung in einer Ladungssicherungsstellung in einer Schnittansicht quer zum Aufbau,
- Fig. 6: eine weitere Ladungssicherungseinrichtung in einer perspektivischen Ansicht.

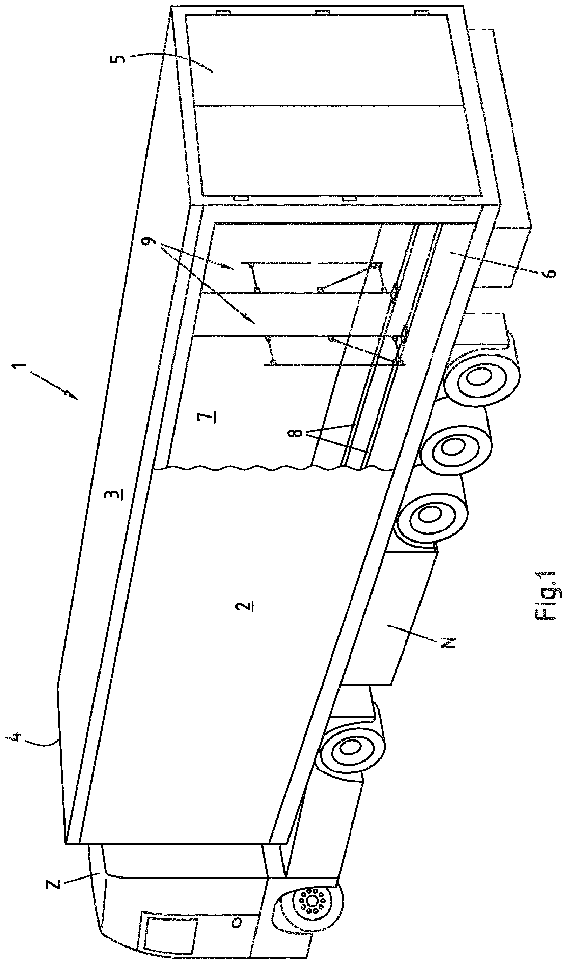

In der Fig. 1 ist ein Aufbau 1 in Form eines Kofferaufbaus eines Nutzfahrzeugs N in Form eines Sattelaufliegers dargestellt. Das Nutzfahrzeug N wird von einer Zugmaschine Z gezogen. Der Aufbau 1 umfasst Seitenwände 2, ein Dach 3, eine Stirnwand 4, eine Rückwand 5 und einen Boden 6, wobei ein Teil der in Blickrichtung vorderen Seitenwand 2 nicht dargestellt worden ist, um Einblick in den Laderaum 7 im Inneren des Aufbaus 1 zu gewähren. Der Boden 6 des Aufbaus 1 und das Dach 3 weisen beim dargestellten und insoweit bevorzugten Aufbau 1 jeweils zwei Schienenelemente 8 auf. Es könnte aber auch nur ein Schienenelement 8 pro Boden 6 und Dach 3 vorgesehen sein. Alternativ wären aber auch mehr als zwei Schienenelemente 8 pro Boden 6 oder Dach 3 denkbar. Ebenfalls ist es bevorzugt, wenn die Schienenelemente 8 des Dachs 3 und des Bodens 6 jeweils einander gegenüberliegend und/oder in Längsrichtung des Aufbaus 1 ausgerichtet sind. Zudem sind die Schienenelemente 8 parallel zueinander ausgerichtet.

Beim dargestellten und insoweit bevorzugten Aufbau 1 ist an jedem Paar von Schienenelementen 8 eine Ladungssicherungseinrichtung 9 vorgesehen. Jede der Ladungssicherungseinrichtungen 9 dient der Ladungssicherung insbesondere in einer Richtung quer zum Aufbau 1. Dazu können die Ladungssicherungseinrichtungen 9 in den Schienenelementen 8 in unterschiedlichen Positionen längs des Aufbaus 1 positioniert und arretiert werden, je nachdem wo die Ladungssicherung erfolgen soll. Dabei wird unter der Längsrichtung des Aufbaus 1 vorzugsweise die längere Ausrichtung des Aufbaus 1 verstanden. Es kann sich aber auch um eine Richtung handeln, die im Aufbau 1 von hinten nach vorne weist und umgekehrt, und zwar insbesondere für den eher ungewöhnlichen Fall, dass der Aufbau 1 in dieser Richtung kürzer sein sollte als in einer Richtung quer dazu.

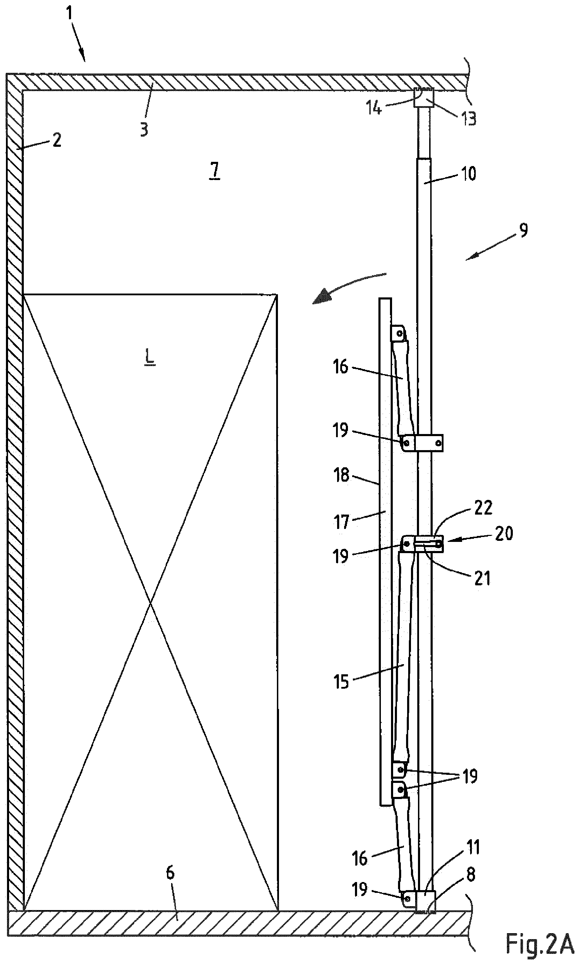

In der Fig. 2A ist ein Detail des Aufbaus 1 dargestellt, und zwar der Bereich der Ladungssicherungseinrichtung 9 und der sich zur benachbarten Seitenwand 2 angrenzende Bereich des Laderaums 7. Dort befindet sich angrenzend zur Seitenwand 2 eine gegenüber einem Verrutschen in Querrichtung zum Aufbau 1 zu sichernde Ladung L. Zu diesem Zweck ist in Längsrichtung des Aufbaus 1 auf Höhe der Ladung L, und zwar vorzugsweise etwa mittig dazu, eine Ladungssicherungseinrichtung 9 positioniert. Die Ladungssicherungseinrichtung 9 weist zu diesem Zweck eine Sperrstange 10 auf. Die Sperrstange 10 ist mit einem Fußteil 11 in einem Schienenelement 8 am Boden 6 und mit einem Kopfteil 13 in einem Schienenelement 14 am Dach 3 arretiert. Dazu greifen das Fußteil 11 und das Kopfteil 13 formschlüssig in das entsprechende Schienenelement 12,14 ein. Auf diese Weise kann ein Verschieben der Sperrstange sowohl in Längsrichtung als auch in Querrichtung des Aufbaus sowie ein Verdrehen der Sperrstange um ihre Längsachse verhindert werden. Alternativ oder zusätzlich ist ein Kraftschluss möglich. Die Sperrstange 10 ist dabei vorzugsweise parallel zu den Seitenwänden 2 des Aufbaus 1 sowie senkrecht zum Dach 3 und zum Boden 6 ausgerichtet. Zudem ist die Sperrstange 10 über einen Steuerhebel 15 und zwei Stützhebel 16 mit einem Anschlagmittel 17 verbunden. Das Anschlagmittel 17 weist eine von der Sperrstange 10 in Querrichtung weg weisende Anschlagfläche 18 für die Ladung L auf, gegenüber der sich die Ladung L abstützen kann, um ein Verrutschen der Ladung L in der entsprechenden Richtung quer zum Aufbau 1 zu verhindern.

Die Stützhebel 16 sind bei der dargestellten und insoweit bevorzugten Ladungssicherungseinrichtung 9 ortsfest aber schwenkbar sowohl mit der Sperrstange 10 als auch mit dem Anschlagmittel 17 verbunden. Dazu weist jede Verbindung eine Schwenkachse 19 auf. Auch ist der Steuerhebel 15 über eine Schwenkachse 19 schwenkbar sowohl an der Sperrstange 10 als auch an dem Anschlagmittel 17 vorgesehen. Zum Verschwenken der Stützhebel 16, des Steuerhebels 15 und des Anschlagmittels 17 muss jedoch der Steuerhebel 15 in eine Justierstellung gebracht werden. In der Ladungssicherungsstellung ist der dargestellte und insoweit bevorzugte Steuerhebel 15 nämlich kraftschlüssig an der Sperrstange 10 festgelegt. Dazu ist an einem Ende des Steuerhebels 15 ein Befestigungsmittel 20 vorgesehen, das einen Klemmhebel 21 aufweist. In einer Klemmstellung des Klemmhebels 21 ist das Befestigungsmittel 20 über ein Schlittenelement 22 klemmend an der Sperrstange 10 gehalten. In einer anderen Stellung des Klemmhebels 21 ist die Klemmung zwischen dem Befestigungsmittel 20 und der Sperrstange 10 aufgehoben. Dann ist das Befestigungsmittel 21 längs der Sperrstange 10 verschiebbar an der Sperrstange 10 gehalten. Bei der dargestellten und insoweit bevorzugten Ladungssicherungseinrichtung 9 sind das Befestigungsmittel 20 und das Schlittenelement 22 als gemeinsames Bauteil ausgebildet.

Der dargestellte und insoweit bevorzugte Steuerhebel 15 kann somit mit einem Ende entlang der Sperrstange 10 und folglich in im Wesentlichen vertikaler Richtung zum Aufbau 1 verschoben werden. Dies führt infolge der Verbindung der Stützhebel 16 mit der Sperrstange 10 und dem Anschlagmittel 17 zu einem Verschwenken nicht nur des Steuerhebels 15, sondern auch der Stützhebel 16 und des Anschlagmittels 17 gegenüber der Sperrstange 10, wobei sich der Abstand des Anschlagmittels 17 bzw. der Anschlagfläche 18 von der Sperrstange 10 verändert. Da das Befestigungsmittel 20 stufenlos entlang der Sperrstange 10 verstellt und festgelegt werden kann, ist zugleich eine stufenlose Verstellung der Anschlagfläche 18 gegenüber der Sperrstange 10 möglich. Die Stützhebel 16 werden dabei entgegengesetzt zum Steuerhebel 15 verschwenkt. Je größer die Winkel zwischen der Sperrstange 10 und dem Steuerhebel 15 sowie den Stützhebeln 16 wird, desto weiter gelangt das Anschlagmittel 17 in Richtung der Seitenwand 2.

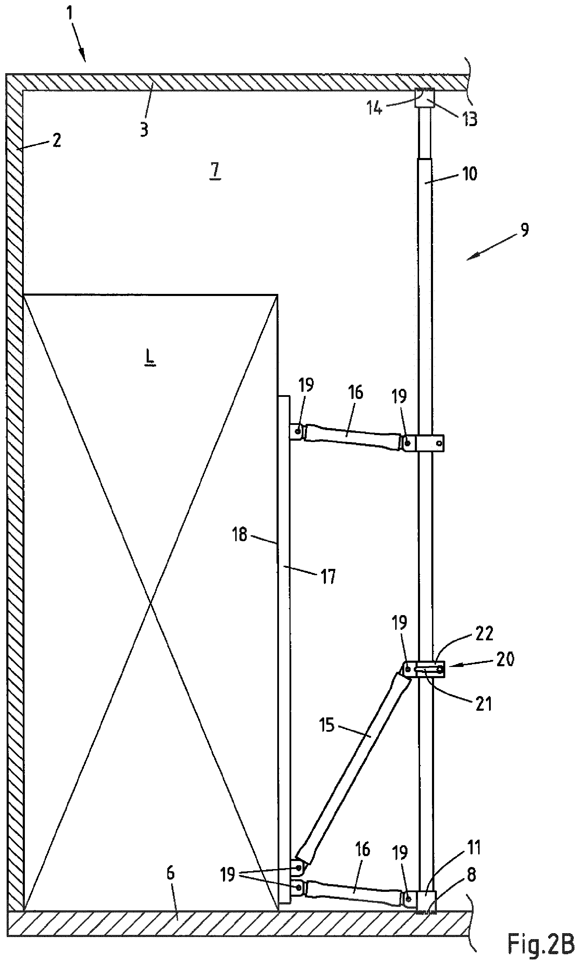

Zur Ladungssicherung wird die Ladungssicherungseinrichtung 9 daher soweit verschwenkt, bis die Anschlagfläche 18 an der Ladung L anliegt oder sich in unmittelbarer Nähe zur Ladung L befindet. Dies ist insbesondere in der Fig. 2B dargestellt. Dabei ist das dargestellte und insoweit bevorzugte Anschlagmittel 17 stabförmig ausgebildet. Zudem ist das Anschlagmittel 17 so über den Steuerhebel 15 und die Stützhebel 16 an die Sperrstange 10 angebunden, dass die Anschlagfläche 18 über den gesamten Verstellbereich des Anschlagmittels 17 quer zum Aufbau 1 im Wesentlichen vertikal, also im Wesentlichen senkrecht zum Boden 6 und zum Dach 3, ausgerichtet ist. Die Stützhebel 16 der dargestellten und insoweit bevorzugten Ladungssicherungseinrichtung 9 verlaufen von dem Anschlagmittel in Richtung der Sperrstange 10 gesehen von oben nach unten, während der Steuerhebel 15 in die gleiche Richtung von unten nach oben verläuft. Auf diese Weise können nicht nur horizontale Kraftkomponenten, also solche, die parallel zum Boden 6 und zum Dach 3 verlaufen, sondern auch vertikale Kraftkomponenten, die dementsprechend senkrecht zum Boden 6 und zum Dach 3 verlaufen abgeleitet werden. Alternativ kann wenigstens ein Hebel 15,16 nach oben und wenigstens ein Hebel 15,16 nach unten verlaufen, um diesen Zweck zu erzielen.

Auch wenn dies nicht im Einzelnen dargestellt ist, so könnte der Steuerhebel zusätzlich oder alternativ über ein Befestigungsmittel an dem Anschlagmittel festgelegt sein, solange dies die Anschlagfläche des Anschlagmittels nicht unverhältnismäßig beeinträchtigt. Dabei ist das Befestigungsmittel zudem vorzugsweise längs des Anschlagmittels verschiebbar, wenn das Befestigungsmittel in eine Justierstellung überführt wird. In der Ladungssicherungsstellung ist das entsprechende Befestigungsmittel vorzugsweise am Anschlagmittel festgelegt.

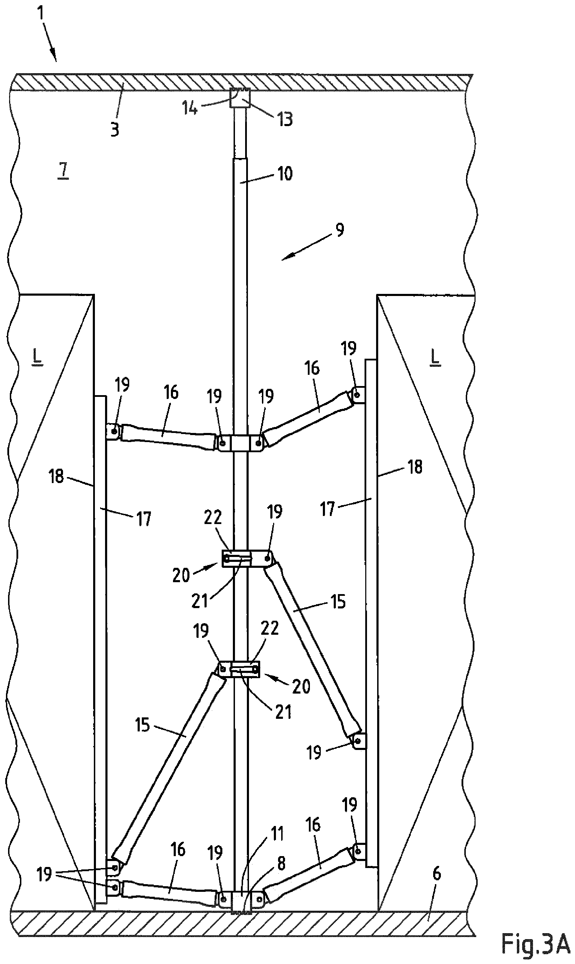

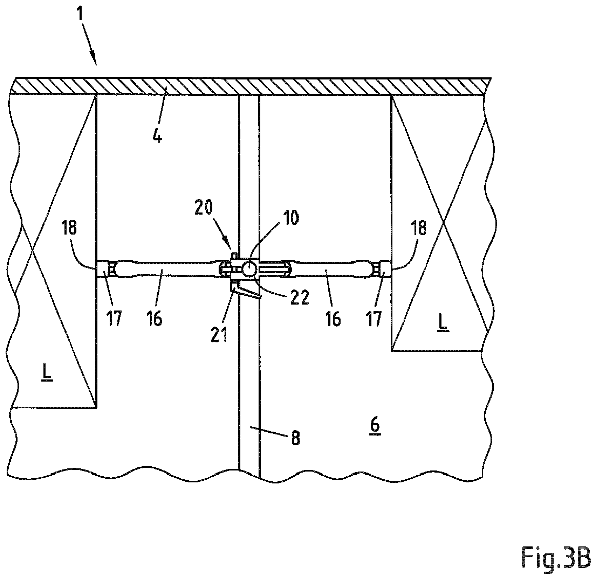

In den Fig. 3A und 3B ist eine abgewandelte Ladungssicherungseinrichtung 9 gemäß den Fig. 2A und 2B einmal in Seitenansicht und einmal in Draufsicht dargestellt. Die Ladungssicherung 9 weist zwei Anschlagmittel 17 auf, die auf gegenüberliegenden Seiten der Sperrstange 10 in Querrichtung des Aufbaus 1 vorgesehen sind. Beide Anschlagmittel 17 weisen, wie zuvor beschrieben, jeweils eine in Richtung der jeweiligen Seitenwand 2 weisende Anschlagfläche 18 auf, die sich in der dargestellten Stellung der Ladungssicherungseinrichtung 9 in Anlage an jeweils einer Ladung L befinden. Die beiden Steuerhebel 15 sind über separate Befestigungsmittel 20 an der Sperrstange 10 festgelegt und über separate Schlittenelemente 22, die jeweils in die Befestigungsmittel 20 integriert sind, längs zur Sperrstange 10 verstellbar. Zudem sind die beiden Befestigungsmittel 20 an der Sperrstange 10 hinreichend weit voneinander beabstandet, so dass sich die Befestigungsmittel 20 beim gegenseitigen Verstellen der Anschlagmittel 17 nicht behindern. Ansonsten ist die Anbindung der Anschlagmittel 17 an die Sperrstange 10 über einen Steuerhebel 15 und zwei Stützhebel 16 wie bei der in den Fig. 2A und 2B dargestellten Ladungssicherungseinrichtung 9 vorgesehen. Aus diesem Grunde sind prinzipiell gleiche Bauteile auch mit gleichen Bezugszeichen versehen.

In der Fig. 3B ist die Stirnwand 4 des Aufbaus 1 dargestellt, an die die Ladung L angrenzt. Ein Verrutschen der Ladung L nach vorne ist damit ausgeschlossen. Bedarfsweise kann hinter jeder Ladung L noch jeweils eine Ladungssicherungseinrichtung, etwa in Form lediglich einer Sperrstange, vorgesehen sein, um ein versehentliches Verrutschen der Ladung nach hinten zu verhindern. In der Fig. 3B ist ferner das im Boden 6 vorgesehene Schienenelement 8 dargestellt, entlang dem die Sperrstange 10 in Längsrichtung des Aufbaus 1 verstellt werden kann. Das Schienenelement 8 ist beim dargestellten und insoweit bevorzugten Aufbau 1 so ausgebildet, dass die Sperrstange 10 zwar nicht stufenlos aber in Schritten von wenigen Millimetern oder wenigstens wenigen Zentimetern arretiert werden kann. Eine stufenlose Verstellung wäre aber auch denkbar.

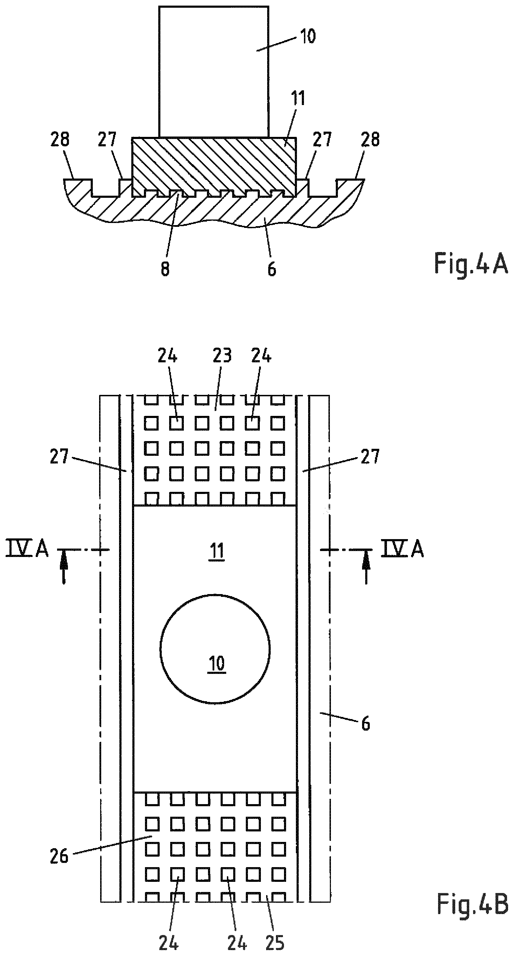

Die Arretierung der Sperrstange 10 im bzw. am Boden 6 ist in den Fig. 4A und 4B näher dargestellt. Dabei erfolgt die Arretierung der Sperrstange 10 am Dach 3 in analoger Weise mit einem gleichartigen, am Dach 3 vorgesehenen Schienenelement 14 und einem Kopfteil 13, wie es dem Fußteil 11 der Fig. 4A und 4B entspricht. Eine separate Beschreibung der Arretierung der Sperrstange 10 am Dach 3 des Aufbaus 1 ist daher nicht erforderlich. Das Schienenelement 8 weist einen inneren Bereich 23 auf, in dem eine Vielzahl separater Vorsprünge 24 vorgesehen sind, die bei dem dargestellten und insoweit bevorzugten Schienenelement 8 einen rechteckigen Querschnitt aufweisen und sowohl in Längsrichtung als auch in Querrichtung des Schienenelements 8 in regelmäßigen Abständen vorgesehen sind. Man kann die Anordnung auch so verstehen, dass die Vorsprünge 24 durch eine Reihe von Längsnuten 25 und Quernuten 26 voneinander getrennt sind.

Zu beiden Längsseiten des Schienenelements 8 wird der innere Bereich 23 von zwei längs des Schienenelements 8 verlaufenden Stegen 27 eingefasst, die etwas weiter vorstehen als die Vorsprünge 24 im inneren Bereich 23 des Schienenelements 8. Jenseits dieser Stege weist der Boden 6 weitere Vorsprünge 28 auf. Letztlich ist sowohl das Schienenelement 8 als auch der übrige Boden 6 profiliert, d.h. mit einem Profil versehen. Das Profil des inneren Bereichs 23 des Schienenelements 8 ist an die Sohle des Fußteils 11 angepasst. Beide sind korrespondierend zueinander ausgebildet, und zwar beim dargestellten und insoweit bevorzugten Fußteil 11 wie positiv und negativ. Mithin ergibt sich ein Formschluss sowohl in Längsrichtung als auch in Querrichtung zum Schienenelement 8. In Querrichtung zum Schienenelement 8 ergibt sich jedoch zusätzlich noch ein Formschluss zwischen den Außenseiten des Fußteils 11 und den Stegen 27, da die Breite des Fußteils 11 im Wesentlichen dem Abstand der Stege 27 des Schienenelements 8 entspricht. Der entsprechende Formschluss erlaubt die Ableitung hoher Kräfte in Querrichtung zum Schienenelement 8 und daher eine sichere Ladungssicherung in einer Richtung quer zum Aufbau 1. Zudem führt insbesondere der Formschluss zwischen dem Fußteil 11 und den Stegen 27 zu einer verdrehsicheren Arretierung der Sperrstange 10. Die Stege 27 blockieren nämlich eine Drehung des Fußteils 11 etwa um die Längsachse der Sperrstange 10.

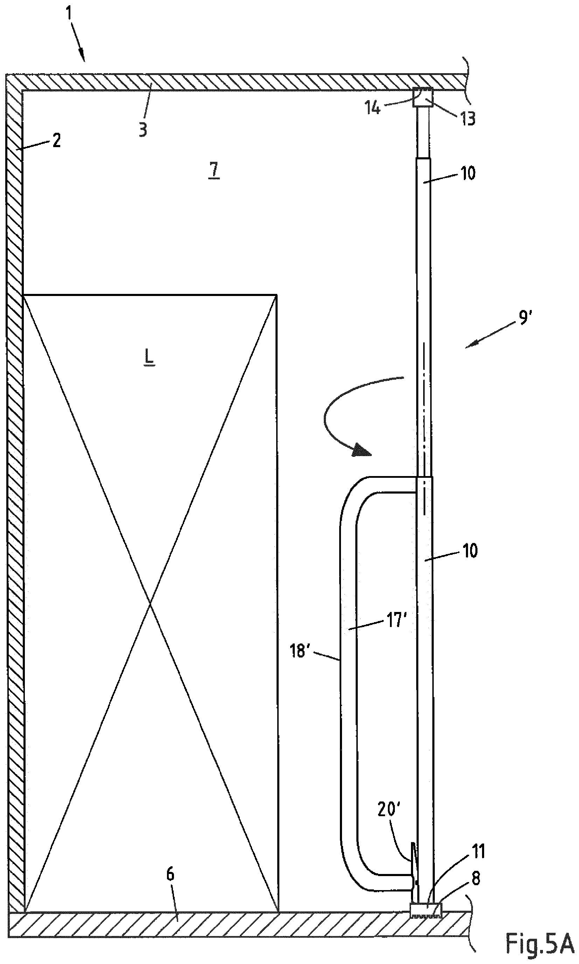

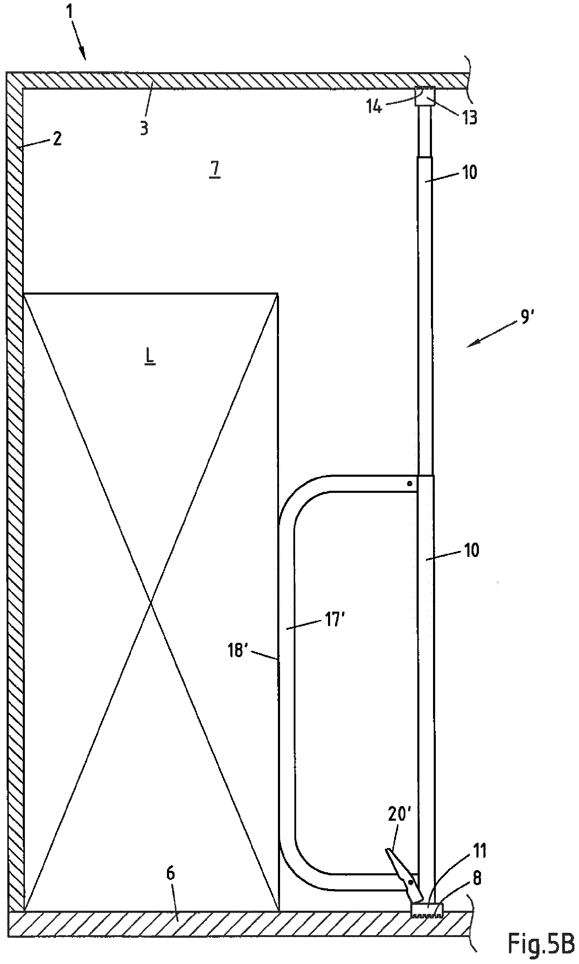

In den Fig. 5A und 5B ist eine weitere Ladungssicherungseinrichtung 9' dargestellt, die ebenfalls eine zwischen dem Boden 6 und dem Dach 3 jeweils in entsprechenden Schienenelementen 8 arretierte Sperrstange 10 umfasst. Die Arretierung der Sperrstange 10 am Dach 3 und am Boden 6 erfolgt dabei vorzugsweise auf die in der Fig. 4A und 4B dargestellte Art und Weise. Um die Sperrstange 10 herum schwenkbar ist ein bügelförmiges Anschlagmittel 17', das an seiner von der Sperrstange 10 abgewandten Seite eine Anschlagfläche 18' für die Ladung L aufweist, die der Ladungssicherung in Querrichtung des Aufbaus 1 dient. Das Anschlagmittel 17' ist mit einem Befestigungsmittel 20' kraftschlüssig an der Sperrstange 10 festlegbar. Ein Formschluss wäre hierbei jedoch alternativ oder zusätzlich denkbar. In der Fig. 5A ist das Befestigungsmittel 20' in einer Justierstellung dargestellt, die eine Drehung des Anschlagmittels 17' um die Sperrstange 10 herum zulässt.

In der Fig. 5B ist das Befestigungsmittel 20' in der Ladungssicherungsstellung dargestellt. Dabei ist das Anschlagmittel 17' soweit um die Sperrstange 10 in Richtung einer Ebene quer zum Aufbau 1 und durch die Sperrstange 10 gedreht, dass das Anschlagmittel 17' mit seiner Anschlagfläche 18' an der Ladung L anliegt, welche angrenzend zu einer Seitenwand 2 positioniert ist. In der Ladungssicherungsstellung ist das Anschlagmittel 17' über das Befestigungsmittel 20' an der Sperrstange 10 festgelegt. Im Falle der Ladungssicherung wird so ein Zurückdrehen des Anschlagmittels 17' vermieden. Zudem ist das Fußteil 11 der Sperrstange 10, wie dies in den Fig. 4A und 4B dargestellt ist, insbesondere über die Stege 27 des Schienenelements 8 zu beiden Seiten des Fußteils 11 verdrehsicher gehalten. Gleiches gilt für die Arretierung der Sperrstange 10 über das Kopfteil 13 an einem Schienenelement 14 am Dach 3 des Aufbaus 1. Die Befestigung des Anschlagmittels 17' relativ zur Sperrstange 10 kann stufenlos erfolgen.

Die Ladungssicherungseinrichtung 9' gemäß Fig. 5A und 5B könnte auch mit zwei drehbar an der Sperrstange 10 gehaltenen Anschlagmitteln 17' ausgebildet sein, um Ladungssicherung in beiden Querrichtungen des Aufbaus 1 betreiben zu können. Dazu sind die Anschlagmittel 17' vorzugsweise auf unterschiedlichen Höhen entlang der Sperrstange 10 mit dieser drehbar verbunden, so dass sich die beiden Anschlagmittel 17' nicht oder nur wenig behindern.

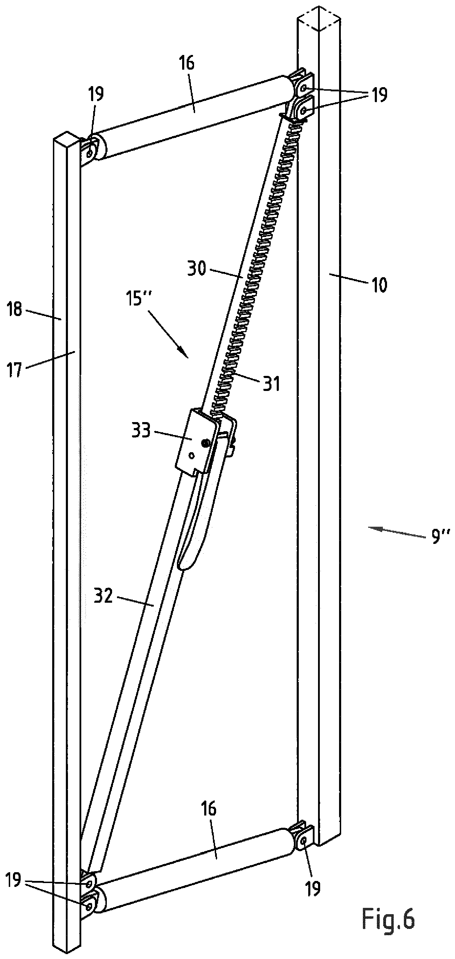

In der Fig. 6 ist noch eine weitere Ladungssicherungseinrichtung 9" dargestellt. Diese ist im Prinzip wie die Ladungssicherung 9 gemäß den Fig. 2A und 2B aufgebaut und vorzugsweise zudem gemäß den Fig. 4A und 4B am Dach 3 und am Boden 6 arretiert. So sind an einer Sperrstange 10 zwei Stützhebel 16 und ein Steuerhebel 15" jeweils um eine Schwenkachse 19 schwenkbar montiert. Die Stützhebel 16 und der Steuerhebel 15" halten zudem ein Anschlagmittel 17 in einer im Wesentlichen vertikalen Ausrichtung. Das Anschlagmittel 17 weist auf der von der Sperrstange 10 abgewandten Seite eine Anschlagfläche 18 zur Anlage an die Ladung L und damit zur Ladungssicherung auf. Im Unterschied zur Ladungssicherungseinrichtung 9 gemäß den Fig. 2A und 2B ist der Steuerhebel 15" nicht verschiebbar entlang der Sperrstange 10 vorgesehen. Zur Verstellung des Anschlagmittels 17 entsprechend der jeweiligen Ladungssituation ist der Steuerhebel 15" nämlich ausziehbar gestaltet.

Der dargestellte und insoweit bevorzugte Steuerhebel 15" weist ein Zahnstangenelement 30 mit einer Reihe von Zähnen 31 auf, das in ein Aufnahmeelement 32 des Steuerhebels 15" eingeschoben und aus diesem wieder herausgezogen werden kann. Über ein Feststellmittel 33 können das Zahnstangenelement 30 und das Aufnahmeelement 32 in der gewünschten relativen Lage miteinander verbunden werden. Dabei erlaubt die Teilung der Zähne 31 des Zahnstangenelements 30 eine recht feine Verstellung, so dass eine Länge des Steuerhebels 15" eingestellt werden kann, die mit dem gewünschten Abstand zwischen dem Anschlagmittel 17 bzw. der Anschlagfläche 18 von der Sperrstange 10 korrespondiert. Wird das Zahnstangenelement 30 weiter in das Aufnahmeelement 32 eingeschoben, nähern sich die Sperrstange 10 und das Anschlagmittel 17 einander an. Wird das Zahnstangenelement 30 weiter aus dem Aufnahmeelement 32 herausgezogen, wird der Abstand zwischen dem Anschlagelement 17 und der Sperrstange 10 größer. In jedem Fall bleibt das Anschlagelement 17 aber im Wesentlichen vertikal ausgerichtet. Dies liegt im Wesentlichen an der Ausbildung und Montage der Stützhebel 16.

Bedarfsweise könnte diese Ladungssicherungseinrichtung 9" wenigstens zwei solche Steuerhebel 15" aufweisen, welche die Sperrstange 10 mit jeweils einem Anschlagmittel 17 verbindet. So könnte Ladungssicherung zu beiden Querseiten des Aufbaus 1 betrieben werden.

## Patentansprüche

1. Aufbau (1), vorzugsweise Kofferaufbau, eines Nutzfahrzeugs (N), insbesondere Lastkraftwagens, Anhängers oder Sattelaufliegers, mit einem Boden (6), einem Dach (3) und wenigstens einer Sperrstange (10) zur Ladungssicherung, wobei die Sperrstange (10) sowohl am Dach (3) als auch am Boden (6) arretiert ist,
**dadurch gekennzeichnet, dass**
wenigstens ein Anschlagmittel (17,17') mit einer Anschlagfläche (18) für die Ladung (L) derart drehbar und/oder schwenkbar an der am Dach (3) und am Boden (6) arretierten Sperrstange (10) vorgesehen ist, so dass der Abstand der Anschlagfläche (18,18'), insbesondere des Anschlagmittels (17,17'), von der Sperrstange (10) in Querrichtung des Aufbaus (1) durch drehen und/oder schwenken des Anschlagmittels (17,17') in Abhängigkeit der Ladesituation variiert werden kann.

2. Aufbau nach Anspruch 1,
**dadurch gekennzeichnet, dass**
die Sperrstange (10) sowohl am Dach (3) als auch am Boden (6) kraftschlüssig und/oder formschlüssig arretierbar ist.

3. Aufbau nach Anspruch 1 oder 2,
**dadurch gekennzeichnet, dass**
die Sperrstange (10) formschlüssig in einem, vorzugsweise geschlossenen, profilierten Schienenelement (8,14) im Dach (3) und/oder im Boden (6) arretiert ist.

4. Aufbau nach einem der Ansprüche 1 bis 3,
**dadurch gekennzeichnet, dass**
das Anschlagmittel (17,17')stabförmig, leistenförmig oder bügelförmig ausgebildet ist und/oder eine im Wesentlichen vertikale Anschlagfläche (18,18') für die Ladung aufweist.

5. Aufbau nach Anspruch 4,
**dadurch gekennzeichnet, dass**
das Anschlagmittel (17) über einen Steuerhebel (15,15") mit der Sperrstange (10) verbunden ist, dass der Steuerhebel (15,15") in einer Justierstellung gegenüber dem Anschlagmittel (17) und/oder gegenüber der Sperrstange (10) schwenkbar vorgesehen ist und dass der Steuerhebel (15,15") in einer Ladungssicherungsstellung gegenüber der Sperrstange (10) und/oder dem Anschlagmittel (17) festlegbar vorgesehen ist.

6. Aufbau nach Anspruch 5,
**dadurch gekennzeichnet, dass**
der Steuerhebel (15,15") in der Justierstellung derart gegenüber dem Anschlagmittel (17) und/oder gegenüber der Sperrstange (10) schwenkbar vorgesehen ist, so dass die Anschlagfläche (18) des Anschlagmittels (17) für die Ladung (L) in unterschiedlichen, vorzugsweise in allen, Ausrichtungen des Steuerhebels (15") wenigstens im Wesentlichen vertikal ausgerichtet ist.

7. Aufbau nach einem der Ansprüche 4 bis 6,
**dadurch gekennzeichnet, dass**
wenigstens ein Ende des Steuerhebels (15) in der Justierstellung in vertikaler Richtung längs des Anschlagmittels (17) und/oder der Sperrstange (10) verschoben werden kann und, vorzugsweise, dass der Steuerhebel (15) in der Justierstellung während des Schwenkens des Steuerhebels (15) längs des Anschlagmittels (17) und/oder der Sperrstange (10) geführt ist.

8. Aufbau nach einem der Ansprüche 4 bis 7,
**dadurch gekennzeichnet, dass**
wenigstens einem Ende des Steuerhebels (15) ein Befestigungsmittel (20) derart zugeordnet ist, so dass das wenigstens eine Ende des Steuerhebels (15) über des Befestigungsmittel (20) wenigstens in vertikaler Richtung längs des Anschlagmittels (17) und/oder der Sperrstange(10), vorzugsweise am Anschlagmittel (17) und/oder der Sperrstange (10), insbesondere stufenlos, lösbar festgelegt werden kann.

9. Aufbau nach Anspruch 8,
**dadurch gekennzeichnet, dass**
das wenigstens eine Ende des Steuerhebels (15) mittels des Befestigungsmittels (20) kraftschlüssig, insbesondere über eine Klemmung, lösbar festlegbar ist.

10. Aufbau nach Anspruch 8 oder 9,
**dadurch gekennzeichnet, dass**
das wenigstens eine Befestigungsmittel (20) an einem Schlittenelement (22) vorgesehen ist und dass das Schlittenelement (22) in der Justierstellung schwenkbar mit dem Steuerhebel (15) verbunden und verschiebbar gegenüber, vorzugsweise an, dem Anschlagmittel (17) und/oder der Sperrstange (10) gehalten ist.

11. Aufbau nach einem der Ansprüche 1 bis 10,
**dadurch gekennzeichnet, dass**
das Anschlagmittel (17,17') über wenigstens einen, vorzugsweise zwei, Stützhebel (16) mit der Sperrstange verbunden ist und, vorzugsweise, dass der wenigstens eine Stützhebel (16) in der Justierstellung gegenüber dem Anschlagmittel (17,17') und/oder gegenüber der Sperrstange (10) schwenkbar und/oder drehbar vorgesehen ist.

12. Aufbau nach Anspruch 11,
**dadurch gekennzeichnet, dass**
der wenigstens eine Steuerhebel (15,15") zwischen der Sperrstange (10) und dem Anschlagmittel (17) nach oben verläuft, während der wenigstens eine Stützhebel (16) zwischen der Sperrstange (10) und dem Anschlagmittel (17) nach unten verläuft.

13. Aufbau nach einem der Ansprüche 1 bis 12,
**dadurch gekennzeichnet, dass**
an wenigstens einer Sperrstange (10) wenigstens zwei Anschlagmittel (17) vorgesehen sind und, vorzugsweise, dass sich die wenigstens zwei Anschlagmittel (17) zu entgegengesetzten Richtungen quer zum Aufbau (1) von der Sperrstange (10) weg erstrecken.

14. Aufbau nach einem der Ansprüche 1 bis 13,
**dadurch gekennzeichnet, dass**
wenigstens zwei Sperrstangen (10) vorgesehen sind und dass die wenigstens zwei Sperrstangen (10) untereinander über wenigstens ein, vorzugsweis wenigstens zwei, Anschlagmittel (17,17') miteinander verbunden sind.

15. Aufbau nach Anspruch 14,
**dadurch gekennzeichnet, dass**
sich jeweils wenigstens ein Anschlagmittel (17,17') von einer Sperrstange (10) in Querrichtung des Aufbaus (1) erstreckt und dass die wenigstens zwei Anschlagmittel (17,17') untereinander, vorzugsweise in Längsrichtung des Aufbaus (1), verbunden sind.

## Claims

1. Structure (1), preferably a box structure, of a commercial vehicle (N), in particular a truck, trailer or semitrailer, with a floor (6), a roof (3) and at least one locking rod (10) for securing load, wherein the locking rod (10) is locked on both the roof (3) and on the floor (6),
**characterised in that**
at least one stop means (17, 17') with a stop face (18) for the load (L) is provided to so rotate and/or pivot on the locking rod (10) that is locked on the roof (3) and on the floor (6), that the distance of the stop face (18,18'), in particular of the stop means (17,17'), of the locking rod (10) may be varied in the transverse direction of the structure (1) by rotating and/or pivoting the stop means (17,17') as a function of the load situation.

2. Structure according to Claim 1,
**characterised in that**
the locking rod (10) may be locked non-positively and/or positively on both the roof (3) and on the floor (6).

3. Structure according to Claim 1 or 2,
**characterised in that**
the locking rod (10) is positively locked in a, preferably closed, profiled rail element (8,14) in the roof (3) and/or in the floor (6).

4. Structure according to any one of Claims 1 to 3,
**characterised in that**
the stop means (17, 17') is rod-shaped, strip-shaped or bow-shaped and/or has a substantially vertical stop face (18, 18') for the load.

5. Structure according to Claim 4,
**characterised in that**
the stop means (17) is connected to the locking rod (10) via a control lever (15, 15") so that the control lever (15, 15") is provided in an adjustment position so that it may pivot with respect to the stop means (17) and/or with respect to the locking rod (10), while the control lever (15,15") is provided fixable in a load-securing position relative to the locking rod (10) and/or the stop means (17).

6. Structure according to Claim 5,
**characterised in that**
the control lever (15, 15") is provided in the adjustment position so that it may pivot with respect to the stop means (17) and/or with respect to the locking rod (10), so that the stop face (18) of the stop means (17) may be aligned at least substantially vertically in various, preferably in all, orientations of the control lever (15") for the load (L).

7. Structure according to any one of Claims 4 to 6,
**characterised in that**
at least one end of the control lever (15) in the adjustment position may be displaced in the vertical direction along the stop means (17) and/or the locking rod (10), wherein, preferably, the control lever (15) in the adjustment position is guided along the stop means (17) and/or the locking rod (10) during pivoting of the control lever (15).

8. Structure according to any one of Claims 4 to 7,
**characterised in that**
at least one end of the control lever (15) is associated with a fastening means (20) so that the at least one end of the control lever (15) may be fixed releasable via the fastening means (20) at least in the vertical direction along the stop means (17) and/or the locking rod (10), preferably on the stop means (17) and/or the locking rod (10), in particular in a stepless manner.

9. Structure according to Claim 8,
**characterised in that**
the at least one end of the control lever (15) may be releasably and non-positively fixed by means of the fastening means (20) in particular via a clamp.

10. Structure according to Claim 8 or 9,
**characterised in that**
the at least one fastening means (20) is provided on a slide element (22), wherein the slide element (22) is pivotally connected to the control lever (15) in the adjustment position and is held displaceable with respect to, preferably on, the stop means (17) and/or the locking rod (10).

11. Structure according to any one of Claims 1 to 10,
**characterised in that**
the stop means (17, 17') is connected to the locking rod via at least one, preferably two, support levers (16) and, preferably, the at least one support lever (16) is provided to pivot and/or rotate in the adjustment position with respect to the stop means (17,17') and/or with respect to the locking rod (10).

12. Structure according to Claim 11,
**characterised in that**
the at least one control lever (15, 15") extends upwards between the locking rod (10) and the stop means (17) while the at least one support lever (16) extends downwards between the locking rod (10) and the stop means (17).

13. Structure according to any one of Claims 1 to 12,
**characterised in that**
at least two stop means (17) are provided for least one locking rod (10) and, preferably, the at least two stop means (17) extend in opposite directions transverse to the structure (1) away from the locking rod (10).

14. Structure according to any one of Claims 1 to 13,
**characterised in that**
at least two locking rods (10) are provided and the at least two locking rods (10) are interconnected with each other by at least one, preferably at least two, stop means (17, 17').

15. Structure according to Claim 14,
**characterised in that**
at least one stop means (17,17') of a locking rod (10) respectively extends in the transverse direction of the structure (1), while the at least two stop means (17,17') are connected with each other, preferably in the longitudinal direction of the structure (1).

## Revendications

1. Structure (1), de préférence une structure de coffre, d'un véhicule utilitaire (N), en particulier d'un poids lourd, d'une remorque ou semi-remorque, avec un fond (6), un toit (3) et au moins une barre de blocage (10) pour la sécurisation de charge, dans laquelle la barre de blocage (10) est bloquée aussi bien sur le toit (3) que sur le fond (6),
**caractérisée en ce que**
l'on prévoit au moins un moyen de butée (17, 17') avec une surface de butée (18) pour la charge (L) en rotation et/ou en basculement sur la barre de blocage (10) bloquée au niveau du toit (3) et au niveau de fond (6), de telle sorte que la distance de la surface de butée (18, 18'), en particulier du moyen de butée (17, 17'), de la barre de blocage (10) peut varier en direction transversale de la structure (1) par rotation et/ou basculement du moyen de butée (17, 17') en fonction de la situation de charge.

2. Structure selon la revendication 1,
**caractérisée en ce que**
la barre de blocage (10) est bloquée aussi bien sur le toit (3) que sur le fond (6) par liaison de force et/ou par liaison de forme.

3. Structure selon la revendication 1 ou 2,
**caractérisée en ce que**
la barre de blocage (10) est bloquée par liaison de forme dans un élément de rail profilé (8, 14), de préférence fermé, dans le toit (3) et/ou dans le fond (6).

4. Structure selon l'une des revendications 1 à 3,
**caractérisée en ce que**
le moyen de butée (17, 17') est conçu en forme de tige, en forme de plinthe ou en forme d'étrier et/ou présente une surface de butée (18, 18'), essentiellement verticale, pour la charge.

5. Structure selon la revendication 4,
**caractérisée en ce que**
le moyen de butée (17) est relié par l'intermédiaire d'un levier de commande (15, 15") avec la barre de blocage (10), **en ce que** l'on prévoit le levier de commande (15, 15") pivotant dans une position de réglage par rapport au moyen de butée (17) et/ou par rapport à la barre de butée (10) et **en ce que** l'on prévoit le levier de commande (15, 15") fixé dans une position de sécurisation de charge par rapport à la barre de blocage (10) et/ou au moyen de butée (17).

6. Structure selon la revendication 5,
**caractérisée en ce que**
l'on prévoit le levier de commande (15, 15") pivotant dans une position de réglage par rapport au moyen de butée (17) et/ou par rapport à la barre de blocage (10), de telle sorte que la surface de butée (18) du moyen de butée (17) pour la charge (L) est orientée au moins essentiellement verticale dans différentes orientations, de préférence dans toutes les orientations du levier de commande (15").

7. Structure selon l'une des revendications 4 à 6,
**caractérisée en ce**
**qu'**au moins une extrémité du levier de commande (15) peut être déplacée, dans la position de réglage, dans une direction verticale le long du moyen de butée (17) et/ou de la barre de blocage (10) et, de préférence, **en ce que** le levier de commande (15) est conduit, dans la position de réglage, pendant le basculement du levier de commande (15), le long du moyen de butée (17) et/ou de la barre de blocage (10).

8. Structure selon l'une des revendications 4 à 7,
**caractérisée en ce**
**qu'**au moins une extrémité du levier de commande (15) est associée à un élément de fixation (20) de telle sorte que la au moins une extrémité du levier de commande (15) peut être fixée de manière amovible, en particulier en continu, par l'intermédiaire de l'élément de fixation (20) au moins en direction verticale le long du moyen de butée (17) et/ou de la barre de blocage (10), de préférence sur le moyen de butée (17) et/ou au niveau de la barre de blocage (10).

9. Structure selon la revendication 8,
**caractérisée en ce que**
la au moins une extrémité du levier de commande (15) peut être fixée, de manière amovible, à l'aide de l'élément de fixation (20), par liaison de force, en particulier par l'intermédiaire d'un serrage.

10. Structure selon la revendication 8 ou 9,
**caractérisée en ce que**
l'on prévoit le au moins un élément de fixation (20) sur un élément chariot (22) et **en ce que** l'élément chariot (22) est relié de manière à pouvoir pivoter, dans la position de réglage, avec le levier de commande (15) et est maintenu coulissant par rapport à l'élément de butée (17) et/ou à la barre de blocage (10), de préférence sur l'élément de butée (17) et/ou sur la barre de blocage (10).

11. Structure selon l'une des revendications 1 à 10,
**caractérisée en ce que**
le moyen de butée (17, 17') est relié, par l'intermédiaire d'au moins un, de préférence, deux leviers d'appui (16), à la barre de blocage et, de préférence, **en ce que** l'on prévoit le au moins un levier d'appui (16), en basculement et/ou en rotation, dans la position de réglage, par rapport au moyen de butée (17, 17') et/ou par rapport à la barre de blocage (10).

12. Structure selon la revendication 11,
**caractérisée en ce que**
le au moins un levier de commande (15,15") s'étend vers le haut entre la barre de blocage (10) et le moyen de butée (17), tandis que le au moins un levier d'appui (16) s'entend vers la bas entre la barre de blocage (10) et le moyen de butée (17).

13. Structure selon l'une des revendications 1 à 12,
**caractérisée en ce que**
l'on prévoit au moins deux moyens de butée (17) sur au moins une barre de blocage (10) et, de préférence, **en ce que** les au moins deux moyens de butée (17) s'étendent en s'éloignant de la barre de blocage (10) dans des directions opposées, transversalement par rapport à la structure (1).

14. Structure selon l'une des revendications 1 à 13,
**caractérisée en ce que**
l'on prévoit au moins deux barres de blocage (10) et **en ce que** les au moins deux barres de blocage (10) sont reliées l'une à l'autre par l'intermédiaire d'au moins un, de préférence, au moins deux moyens de butée (17, 17').

15. Structure selon la revendication 14,
**caractérisée en ce**
**qu'**au moins un moyen de butée (17, 17') s'étend respectivement à partir d'une barre de blocage (10) en direction transversale de la structure (1) et **en ce que** les au moins deux moyens de butée (17, 17') sont reliés l'un à l'autre, de préférence dans une direction longitudinale de la structure (1).
